## Europäisches Patentamt

## European Patent Office

## Office européen des brevets

(19)

(11) Publication number: **0 240 325 B1**

(12) **EUROPEAN PATENT SPECIFICATION**

(45) Date of publication of the patent specification:
23.05.90

(51) Int. Cl.⁵: **C08F 4/64, C08F 10/00**

(21) Application number: **87302812.0**

(22) Date of filing: **31.03.87**

(54) Catalyst components for alpha olephine-polymerizing catalysts and procedure for manufacturing same.

(30) Priority: **01.04.86 FI 861385**

(43) Date of publication of application:
**07.10.87 Bulletin 87/41**

(45) Publication of the grant of the patent:
**23.05.90 Bulletin 90/21**

(84) Designated Contracting States:
**AT BE CH DE ES FR GB GR IT LI LU NL SE**

(56) References cited:
**FR-A- 2 306 221**
**US-A- 4 421 674**

**CHEMICAL ABSTRACTS, vol. 89, 1978, Columbus, OH (US); p. 128, no. 8435d**

(73) Proprietor: **NESTE OY, Keilaniemi,
SF-02150 Espoo 15(FI)**

(72) Inventor: **Garoff, Thomas, Borgstr. Grand 4 K,
SF-00930 Helsinki(FI)**
Inventor: **Lofgren, Barbro, Niittyyranta 17 B,
SF-00930 Helsinki(FI)**
Inventor: **Luciani, Luciano, 37, MacAlister, Ferrara(IT)**

(74) Representative: **Lamb, John Baxter et al, MARKS & CLERK 57/60 Lincoln's Inn Fields, London WC2A 3LS(GB)**

## Description

The invention concerns catalyst components for alpha olephine-polymerizing catalysts which consist of an organoaluminium compound, an electron donor and a solid catalyst component which has been obtained when a compound containing magnesium has reacted with a titanium halogen compound. The invention also concerns a procedure for manufacturing these catalyst components and a procedure for polymerizing alpha olephines, in particular propylene, making use of said catalyst components.

For polymerizing alpha olephines, prior art knows catalysts with high activity which have been manufactured of an aluminium alkyl compound, of an electron donor and of a halogenated titanium compound on a carrier substance comprising various magnesium compounds. For magnesium compound usually chlorinated magnesium compounds have been used, which may be for instance water-free magnesium chloride alone or together with other magnesium compounds, or an organic magnesium compound which has been prepared by halogenating organic magnesium compounds with the aid of compounds containing chlorine.

In polymerizing catalysts of this type, the properties of the solid carrier component have a significant influence on the properties of the ultimate catalyst, for instance on its activity. These properties can be substantially influenced through the mode of manufacturing the carrier component.

The present invention concerns carrier components which have been prepared from minerals containing magnesium and aluminium which may be natural minerals or synthetic minerals. An example of this type of mineral is hydrotalsite, and its composition may be presented by the following formula:
$Mg_4Al_2(OH)_{12}CO_3 . 3 H_2O$
Hydrotalsite also occurs in several other forms. Thus, $Mg_{4.5}Al_2(OH)_{13}.4H_2O$, $Mg_2Al_2(OH)_8CO_3.3H_2O$ and $Mg_6Al_2(CO_3)(OH)_{16}.4H_2O$ are also hydrotalsites. Other minerals containing magnesium and aluminium are for instance indigirite $Mg_2Al_2(CO_3)_4(OH)_2.15H_2O$ and manassite $Mg_6Al_2(CO_3)(OH)_{16}.4H_2O$.

There is nothing novel in itself in the use of magnesium minerals for starting material in preparing inert carrier components for Ziegler-Natta catalysts to the purpose of polymerizing olephines. In the Patent DE 2614325, a procedure is disclosed in which hydrotalsite is calcinated by heating it for several hours at high temperatures, whereby it is totally converted into a mixture of magnesium and alumnium oxides, which is totally water-free. Catalyst carriers have been prepared from this mixture by treating it with titanium tetrachloride, whrereafter an active Ziegler-Natta catalyst has been obtained to the purpose of polymerizing olephines, in the first place ethylene.

As disclosed in the Patent DE 3036450, polymerizing catalysts have been prepared from hydrotalsite by mixing it in hexane at room temperature. Thereafter solid substance has been added which has been obtained by grinding magnesium chloride for several hours in the presence of titanium tetrachloride in a nitrogen atmosphere. Catalysts prepared in this way are applied for polymerizing ethylene, which is not as sensitive to the effect of moisture as propylene polymerizing. If the catalyst carrier contains water, a catalyst is obtained which is inactive in propylene polymerizing

It has turned out to be difficult to manufacture, from hydrotalsite and equivalent minerals containing aluminium, active Ziegler-Natta catalysts, in particular those for the polymerizing of propylene because in these processes the catalysts are highly sensitive to moisture and to the crystal water present in the carrier. Minimal quantities of crystal water already lower the activity of the catalyst significantly. This is probably due to the aluminium in the mineral, which impairs the activity of the catalyst and inhibits liberation of the carrier of its crystal water.

The present invention relates to catalyst components for those alpha olephine-polymerizing catalysts which consist of an organoaluminium compound, an external electron donor and a solid catalyst component which has been obtained when a solid carrier component containing magnesium has reacted with titanium halogen compound and which are free of the drawbacks mentioned and, therefore, are fit to be used in polymerizing propylene.

The catalyst component of the invention is characterized in that it has been composed by making a solid carrier component, which has been prepared

(a) by dissolving a natural mineral or synthetic mineral containing magnesium and aluminium in hydrochloride acid;
(b) by evaporating the solution until dry;
(c) by calcinating the obtained salt mixture by heating it at 130-150° in order to convert the aluminium component into hydroxide;
(d) by dissolving the magnesium component in ethanol;
(e) by drying the ethanol solution of the magnesium component with the aid of periodic azeotropic distillation; and
(f) by precipitating the solid carrier component from the ethanol solution

react with a titanium halogen compound in the presence of an internal electron donor or without electron donor.

The invention also concerns a procedure for manufacturing catalyst components for alpha olephine-polymerizing catalysts which consist of an organoaluminium compound, an external electron donor and a solid catalyst component containing magnesium which has been obtained when a solid carrier component containing magnesium has reacted with a titanium halogen compound. The procedure of the invention is characterized in that said catalyst component is produced by making a solid carrier component which has been prepared

(a) by dissolving a natural mineral or synthetic mineral containing magnesium and aluminium in hydrochloric acid
(b) by evaporating the solution until dry;

(c) by calcinating the obtained salt mixture by heating it at 130-150° in order to convert the aluminium component into hydroxide;

(d) by dissolving the magnesium component in ethanol;

(e) by drying the ethanol solution of the magnesium component with the aid of periodic azeotropic distillation; and

(f) by precipitating the solid carrier component from the ethanol solution

react with a titanium halogen compound in the presence of an internal electron donor or without electron donor.

The catalyst component of the invention and the carrier component used therein afford several advantages over carrier components containing magnesium which have been prepared by conventional synthesis techniques. For instance, in manufacturing the carrier component it is possible to use an open reaction vessel, and because the synthesis is not sensitive to oxygen and moisture, an inert nitrogen atmosphere is not absolutely indispensable in the synthesis. In comparison with carriers which have been prepared by halogenating an organic carrier component containing a magnesium compound, it is easier and less expensive to manufacture the carrier component of the invention. Hydrochloric acid is the cheapest choice of chlorinating medium, and in its preparation conventional aqueous solutions of hydrochloric acid may be used because the crystal water can be removed quite simply. Moreover, in manufacturing the carrier component, hydrochloric acid can be used in excess because the hydrochloric acid can be removed in the next synthesis step. A further advantage of the catalyst component and procedure of the invention is that any magnesium products which may be produced as by-products, such as MgOHCl, which impair the properties of the catalyst, escape efficiently from the catalyst component of the invention.

The first step in preparing the catalyst component of the invention is dissolving the mineral containing magnesium in hydrochloric acid. The mineral may be in the form of powder or granules, but the preferred choice is an aqueous suspension. Most minerals can be mixed with water to form a homogeneous suspension, and the use of such suspension is advantageous because it checks the violent reaction when hydrochloric acid is added.

The hydrochloric acid is advantageously added in the form of concentrated aqueous solution. On addition of hydrochloric acid the magnesium compound is completely dissolved when the pH of the suspension has gone down far enough. When for instance hydrotalsite is used for the mineral, such a quantity of hydrochloric acid is added that pH goes down at least to pH 2, preferably even down to pH 1. If too little hydrochloric acid is added, a great part of the magnesium may remain undissolved. Hydrotalsite, for instance, acts as a strong buffer and liberates only OH ions until pH 2 has been reached.

After the magnesium mineral has been dissolved in hydrochloric acid, the solution is evaporated in the next step until dry. At the same time, the excess quantity of hydrochloric acid evaporates. The salt mixture obtained after evaporation contains the aluminium from the talsite in the form of trichloride. Its elimination is indispensable because it would impede the removal of crystal water from the carrier component at a later stage. The salt mixture is heated for removing the aluminium salts, as taught by the invention, at 130 to 150°C, whereby decomposition of the aluminium trichloride into aluminium hydroxide and hydrochloric acid ensues. The latter will evaporate during heating. The heating time may be so selected that the aluminium chloride has time to be converted into aluminium hydroxide, while the magnesium component does not have time to be calcinated and decomposed. The last-mentioned reaction also imposes an upper limit on the heating temperature. 0.5 to 5 hours have proved to be an appropriate heating time, advantageously about 2 hours, at 130-150°C. Too high temperature causes decomposition of the magnesium component into magnesium chloride and hydroxide, resulting in lower yield.

After the calcination process, the salt mixture is dissolved in ethanol, whereby the magnesium component appropriate to be a carrier dissolves completely, while the aluminium component in hydroxide form remains undissolved. The latter can be separated by filtering or centrifuging from the ethanol solution. Thus, as taught by the invention, the harmful aluminium and magnesium components can be separated in a simple manner, almost quantitatively, from the magnesium component. Likewise, any other aluminium compounds, such as aluminium oxide, and insoluble magnesium compounds which may be produced in the calcinating process, such as magnesium oxychloride, remain undissolved.

The obtained clear ethanol solution now contains nothing but magnesium component with crystal water. Removal of the crystal water is indispensable for producing an active catalyst component. As taught by the invention, the crystal water is removed by distilling, with the aid of periodic azeotropic distillation. During this distillation, an azeotropic mixture of alcohol and water escapes from the solution, whereby the water quantity is reduced. By adding new water-free ethanol to the solution and by repeated distillation, total removal of crystal water from the magnesium component is accomplished.

In the present invention it has been noted that the above calcinating step is indispensable to order that removal of the crystal water with the aid of azeotropic distillation migh be feasible. If the salt mixture obtained after the steps of dissolving in hydrochloric acid and evaporation is directly dissolved in ethanol, a clear solution is admittedly obtained, but this solution is not driable with the aid of azeotropic distillation. This is because Al(III) ions possess the ability to bind water in their crystal structure:

$$Al^3 + 6\ H_2O = Al(H_2O)_6{}^{3+}$$

This ion reacts further with water, whereby a completely or partially equivalent hydroxide product is produced:

$$Al(H_2O)_6{}^{3+} + H_2O = Al(H_2O)_5OH^{2+} + H_3O^+$$
$$Al(H_2O)_5(OH) + H_2O = Al\ (H_2O)_6(OH)_2{}^{2+} + H_3O^+$$

The water which is bound to Al(III) ions in the above forms is not separable with the aid of azeotropic distilling.

The number of azeotropic distilling runs required depends on the amount of water present in the solution and on the intended use of the catalyst. If the catalyst is intended to be used in polymerizing ethylene, fewer runs are needed, for instance 1 to 5 runs. When manufacturing a carrier component for propylene polymerizing, nearly water-free carrier is required, and experience has taught that this is achieved if the number of distilling runs is 3 to 15, advantageously 10 to 12. The water content of the carrier component can then be brought down to 0.3 moles of crystal water, which may be considered the upper limit for propylene-polymerizing catalysts.

After drying out the crystal water, precipitation of the magnesium carrier component is effected by transferring the dried ethanol solution into a cold solvent, whereby the magnesium component will precipitate. Suitable solvents are common organic hydrocarbons used as solvents. Heptane is a highly appropriate solvent for the reason that its boiling point is high enough so that in the titanizing step which has to be carried out subsequently titanium has time to react, and on the other hand it is low enough to avoid melting of the carrier component in the titanizing step.

When the ethanol solution containing magnesium component is added into cold heptane, the carrier component is precipitated in finely divided form. After washing and drying, the carrier component is titanized with the aid of titanium tetrachloride in a manner known in itself in the art, for producing the catalyst component.

Titanizing may be accomplished for instance in that the solid carrier component is mixed with a titanium halogen compound once or several times. Before, during or after the titanizing process the catalyst component may furthermore be treated with the aid of an internal electron donor compound. The titanizing is preferably accomplished in two steps, between which may be added internal electron donor, which is usually an amine, ether or ester of its type.

In the first step a low temperature is to be recommended, e.g. below 0°C, preferably below -20°C. The second titanizing step may be carried out at higher temperature, e.g. at 35 to 110°C, a reaction time of 1-1.5 hours being sufficient. The solid reaction product is then separated from the liquid phase and washed with hydrocarbon solvents to remove impurities and derivatives. The catalyst component may be dried in light vacuum or in nitrogen gas at room temperature, or at slightly elevated temperature, and it may be homogenized by grinding it in a ball mill.

The catalyst component of the invention may then be used to polymerize alpha olephines by allowing it to come into contact with an Al compound and an external compound releasing electrons. In the role of external compounds releasing electrons may be used, for instance, amines, ethers, esters (preferably alkyl and arylesters of aromatic carboxylic acids) or silane compounds (alkyl/aryl silanes), examples of such being, among others, the methyl and ethyl esters of benzoic, toluic and phthalic acid, isobutylesters of phthalic acid, triethoxysilane, etc. Said electron donors are compounds which are able to enter complexes with Al alkyls. The stereo-specificity of the catalyst can be improved with their aid.

The external compound releasing electrons, or donor, and the Al alkyl are mixed together, the molar proportion of the compound releasing electrons to the Al compound being about 20 and the Al/Ti molar proportion being between 10 and 300, depending on the polymerizing system. Polymerizing may be carried out either as slurry or bulk polymerizing, or in the gas phase.

Catalyst components and catalysts prepared as taught by the invention may be used to polymerize alpha olephines, such as ethylene, propylene and butylene, by the slurry, bulk and gas phase methods, but the catalyst components of the invention are particularly well suited for use in polymerizing propylene because in them the quantity of crystal water in the carrier substance is singularly low and, as a result, the activity of the catalysts is particularly high especially regarding polymerizing of propylene.

The invention is more closely illustrated in the following examples.

Example 1

17 g hydrotalsite $Mg_4Al_2(OH)_{12}CO_3.3H_2O$ were suspended in 100 ml water. Concentrated hydrochloric acid (38%) was added to the suspension until pH 1.5 was reached. Thereafter the solution was evaporated until dry. The dry solution was heated for 2 hrs at 144°C. After heating the salt was mixed in 200 ml ethanol. The solution was centrifuged for 10 min. at 3000 rpm. The clear solution was transferred into a one-litre three-necked flask, in which the ethanol solution was dried with azeotropic distillation, consuming in total 1200 ml absolute ethanol, which was added in batches of 100 ml. When the ethanol solution was dry, it was siphoned, while hot, into 500 mol of cold heptane (-20°C), in which crystallization of the carrier component took place. The extra ethanol was extracted from the precipitation by washing with heptane. The carrier component was transferred into 900 ml cold TiCl₄ (-15°C). The mixture was allowed to assume room temperature, whereafter 5 ml of diisobutylphthalate were added thereto, and the mixture was boiled for 1 hr at 110°C. The carrier component was allowed to settle, whereafter the TiCl₄ was siphoned off and replaced with another 900 ml batch. The mixture was boiled and the TiCl₄ was removed from the catalyst as above. Thereafter, the catalyst was washed with heptane (400 ml) five times, the mixture being boiled for 15 min. the first time, for 30 min. the second time, for 15 min. the third time, and for 10 min. the last two times. The washed catalyst was dried in a nitrogen flow. The yield of catalyst was 13 g, and the catalyst contained: Ti 9.0%, Mg 11.0%, Al 0.15%, and Cl 53.0%.

The carrier component prepared in the way just described was applied in propylene polymerizing, adding into a 2-litre polymerizing reactor catalyst which had been prepared by mixing, as aluminium alkyl compound, triethylaluminium and, as Lewis compound, diphenylmethoxysilane (Al donor mole proportion: 20) in 50 ml heptane and admixing to this, after 5 minutes, carrier component so as to make the Al/Ti molar proportion 200. Polymerizing was carried out in conditions as follows: propylene partial pressure 9.0 bar, hydrogen partial pressure 0.3 bar, temperature 70°C, and polymerizing time 3 hrs.

The activity of the catalyst was found to be 6.14 kg PP per g of catalyst in 3 hours. 95% of the polymer particles were in the range 0.2 mm to 1.0 mm in diameter. The bulk density of the polymer was 0.28 g/ml.

## Example 2

A catalyst component was prepared as in Example 1, except that after dissolving in hydrochloric acid and evaporating until dry the calcinating period was 4 hours, respectively 5 hours. In the first instance, 12 g of catalyst were produced, and it contained: Ti 2.4%, Mg 11.0%, Al 1.0%, and Cl 53%. In the latter instance, the yield of catalyst was 11 g, and the catalyst contained: Ti 4.5%, Mg 11.0%, and Al 570 ppm.

The catalysts were used to polymerize propylene in the same way as in Example 1. In the first instance, the activity was found to be 6.12 kg PP per g of catalyst in 3 hours, and in the latter instance the catalyst activity was 6.06 kg PP per g of catalyst in 3 hours. In both cases, the bulk density of the polymer was 0.3 g/ml, and 95% of the polymer particles were in the range of 0.2 to 1.0 mm in diameter.

## Example 3

17 g hydrotalsite $Mg_4Al_2(OH)_{12}CO_3.3H_2O$ were suspended in 200 ml water. The suspension was titrated with conc. hydrochloric acid (38%) to pH 1. The titrated solution was evaporated until dry, the salt dissolved in ethanol, and drying of the carrier component was carried out with the aid of azeotropic distillation. The drying process consumed 10 0 ml absolute ethanol (moisture content less than 100 ppm H.O). The distillation took place in a slight nitrogen flow. The dry, cold ethanol solution was transferred into 500 ml of cold heptane (-20°C), whereby the carrier component crystallized. The carrier component was henceforward processed in inert conditions ($N_2$). The extra ethanol was extracted with two heptane washings, and thereafter the carrier component was transferred into cold titanium tetrachloride (-20°C). After the mixture had warmed up to room temperature, 0.1 mol/mol Mg of diisobutylphthalate were added. The mixture was boiled for 1 hr at 110°C, whereafter the catalyst was allowed to settle, and the $TiCl_4$ solution was replaced with new solution and the treatment repeated. The completed catalyst component was washed with heptane and dried with nitrogen. The yield was 1.0 g and the catalyst component contained: Mg 13.22%, Ti 3.8%, and Cl 53.3%. The catalyst component was used to polymerize propylene as in Example 1, and its activity was found to be 0.5 kg PP per g of catalyst.

The test shows that calcination during a very short period only fails to yield catalyst of even satisfactory activity.

## Example 4

17 g hydrotalsite $Mg_4Al_2(OH)_{12}CO_3.3H_2O$ were suspended in 100 ml water. Such a quantity of conc. hydrochloric acid was added to the suspension that the pH of the suspension became 1.5. Thereafter, the solution was evaporated until dry. The dried salt mixture was not calcinated, instead of which it was added, with mixing, directly into 200 ml ethanol. The ethanol solution was centrifuged for 10 min. at 3000 rpm. The clear solution was transferred into a three-necked flask, in which the ethanol solution was dried by the aid of azeotropic distillation, consuming 1200 ml absolute ethanol, added in batches of 100 ml. When the ethanol solution was dry, it was siphoned, while hot, into 500 ml of cold heptane (-20°C), in which the carrier component crystallized. The extra ethanol was extracted with two heptane washings. The carrier component was transferred into 900 ml cold titanium tetrachloride (-20°C). The mixture was allowed to assume room temperature, and 5 ml diisobutylphthalate were added, whereafter the mixture was boiled for 1 hr at 110°C. The catalyst component was allowed to settle, the $TiCl_4$ was siphoned off and replaced with a new batch. Finally, the catalyst component was washed with heptane several times. The washed catalyst component was dried in a nitrogen flow. The yield was 1.09% of catalyst component, and it contained: Ti 3.78%, Mg 13.22%, Al 5.24%, and Cl 53.34%. The catalyst was used to polymerize propylene as in Example 1, and it was observed that its activity was only 1.5 kg PP per g of catalyst in 3 hours. The polypropylene which was obtained was morphologically equivalent with the polymer of Example 1.

This example clearly shows that if the Al-Mg combined salt is not calcinated as taught by the invention, the Al content in the completed carrier will be high and for this reason the activity of the catalyst will be low.

## Example 5

17 g $Mg_4Al_2(OH)_{12}CO_3.3H_2O$ were suspended in 100 ml ethanol, and 45 ml of conc. hydrochloric acid (38%) were added to the suspension. The solution was evaporated until dry, and the salt mixture was calcinated for 1 hr at 130°C. The salt mixture was suspended, with mixing, in 100 ml ethanol, kept in inert conditions and thereafter transferred, with mixing, into cold heptane (-20°C), in which the carrier component crystallized. The extra ethanol was extracted with two heptane washings, whereafter the carrier component was transferred into 500 ml of cold $TiCl_4$ (-20°C). After the mixture had warmed to room temperature, 0.1 mol/mol Mg diisobutylphthalate were added. The mixture was boiled for 1 hr at 110°C, whereafter the catalyst component was allowed to settle, and the $TiCl_4$ solution was replaced with new solution, and the process repeated. The completed catalyst component was washed, and dried with nitrogen. The yield was minimal. The catalyst was used for propylene-polymerizing, but its activity was nil.

The test shows that the removal of crystal water, as taught by the invention, is an essential step for producing a serviceable propylene-polymerizing catalyst.

## Claims

1. A process for the manufacture of a catalyst component for use in an alpha-olefin polymerization catalyst, which process comprises:

(a) dissolving a natural or synthetic mineral containing magnesium and aluminium in hydrochloric acid;

(b) evaporating the solution until dry;

(c) calcining the resultant salt mixture by heating it at 130-150°C to convert the aluminium component into the hydroxy form;

(d) dissolving the magnesium component in ethanol;

(e) drying the ethanolic solution of the magnesium component by azeotropic distillation;

(f) precipitating a solid carrier component from the ethanolic solution; and

(g) reacting the solid carrier component with a titanium halogen compound in the presence of an internal electron donor or without an electron donor.

2. A process according to claim 1, characterized in that the mineral containing magnesium and aluminium is hydrotalsite.

3. A process according to claim 1 or claim 2, characterized in that after evaporating the hydrochloric acid solution the salt mixture is calcined for 1 to 5 hours.

4. A process according to any one of the preceding claims, characterized in that the dissolution of the mineral containing magnesium and aluminium in hydrochloric acid is effected by suspending the mineral in water and adding to the aqueous suspension hydrochloric acid in such a quantity that the pH is reduced to pH 1-2.

5. A process according to any one of the preceding claims, characterized in that 1-15 periodic azeotropic distillations are effected.

6. A catalyst containing a component obtained by a process as claimed in any one of the preceding claims.

7. A method of polymerizing an olefin, especially propylene, using a catalyst as claimed in claim 6.

## Patentansprüche

1. Verfahren zur Herstellung einer Katalysatorkomponente zur Verwendung in einem Katalysator zur Polymerisation von Alpha-Olefinen, wobei das Verfahren umfasst:

(a) Auflösen eines Magnesium oder Aluminium enthaltenden natürlichen und synthetischen anorganischen Stoffes in Salzsäure;

(b) Verdampfen der Lösung bis zum Austrocknen;

(o) Calcinieren der so erhaltenen Salzmischung durch Heizen auf 130 bis 150°C, um die Aluminiumkomponente in dei Hydroxy-Form zu konvertieren;

(d) Lösen der Magnesiumkomponente in Ethanol;

(e) Trocknen der ethanolischen Lösung der Magnesiumkomponente durch azeotropische Destillation;

(f) Fällen einer Feststoffträgerkomponente aus der ethanolischen Lösung; und

(g) Umsetzen der Feststoffträgerkomponente mit einer Titan-Halogen-Verbindung in Gegenwart eines Donators von internen Elektronen oder ohne Elektronendonator.

2. Verfahren nach Anspruch 1, dadurch gekennzeichnet, dass der Magnesium oder Aluminium enthaltende anorganische Stoff Hydrotalsit ist.

3. Verfahren nach Anspruch 1 oder 2, dadurch gekennzeichnet, dass die Salzmischung nach dem Verdampfen der Salzsäurelösung während 1 bis 5 Stunden calciniert wird.

4. Verfahren nach einem der vorangehenden Ansprüche, dadurch gekennzeichnet, dass das Auflösen des Magnesium oder Aluminium enthaltenden anorganischen Stoffes in Salzsäure durch suspendieren des anorganischen Stoffes in Wasser und Beigabe von Salzsäure zur wässrigen Suspension in solcher Menge, dass der pH-Wert auf pH 1–2 reduziert wird, erfolgt.

5. Verfahren nach einem der vorangehenden Ansprüche, dadurch gekennzeichnet, dass 1–15 Läufe von periodischer azeotropischer Destillation durchgeführt werden.

6. Katalysator, umfassend eine nach einem Verfahren gemäss einem der vorangehenden Ansprüche erhaltene Komponente.

7. Verfahren zur Polymerisation eines Olefins, insbesondere Propylen, bei welchem ein Katalysator gemäss Anspruch 6 verwendet wird.

## Revendications

1. Un procédé pour la fabrication d'un composant de catalsateur utile dans un catalysaeur pour la polymérisation d'α–oléfines, lequel procédé comprend:

(a) la dissolution d'un minéral naturel ou synthétique contenant du magnésium et de l'aluminium dans l'acide chlorhydrique;

(b) l'évapóration à sec de la solution;

(c) la calcination du mélange de sels obtenu par chauffage à 130–150°C pour transformer le composant à l'aluminium sous la forme hydroxy;

(d) la dissolution du composant au magnésium dans l'éthanol;

(e) le séchage de la solution éthanolique du composant au magnésium par distillation azéotropique;

(f) la précipitation d'un composant support solide à partir de la solution éthanolique; et

(g) la réaction du composant support solide avec un composé halogéné du titane en présence d'un donneur d'électrons interne ou sans donneur d'électrons.

2. Un procédé selon la revendication 1, caractérisé en ce que le minéral contenant du magnésium et de l'aluminium est l'hydrotalsite.

3. Un procédé selon la revendication 1 ou la revendication 2, caractérisé en ce que, après l'évaporation de la solution d'acide chlorhydrique, on calcine le mélange de sels pendant 1 à 5 heures.

4. Un procédé selon l'une quelconque des revendications précédentes, caracterisé en ce que la dissolution du minéral contenant du magnésium et de l'aluminium dans l'acide chlorhydrique est effectuée par mise en suspension du minéral dans l'eau et addition à la suspension aqueuse d'acide chlorhydrique en une quantité telle que le pH soit abaissé à un pH 1–2.

5. Un procédé selon l'une quelconque des revendications précédentes, caractérisé en ce que l'on effectue 1 à 15 distillations azéotropiques périodiques.

6. Un catalyseur contenant un composant obtenu selon un procédé comme revendiqué dans l'une quelconque des revendications précédentes.

7. Un procédé de polymérisation d'une oléfine, en particulier du propyléne, utilisant un catalyseur comme revendiqué dans la revendication 6.